# EUROPEAN PATENT SPECIFICATION

(11) **EP 3 232 323 B1**
(45) Date of publication and mention of the grant of the patent: **04.01.2023**
(21) Application number: 16195704.8
(22) Date of filing: 26.10.2016
(51) Int. Cl.: G06F 9/44

(54) **METHOD AND APPARATUS FOR DISPLAYING STATUS INFORMATION OF APPLICATION**
VERFAHREN UND VORRICHTUNG ZUR ANZEIGE VON ZUSTANDSINFORMATIONEN EINER ANWENDUNG
PROCÉDÉ ET APPAREIL D'AFFICHAGE D'INFORMATIONS D'ÉTAT D'UNE APPLICATION

(30) Priority: 13.04.2016 CN 201610227324
(43) Date of publication of application: 18.10.2017
(73) Proprietor: Beijing Xiaomi Mobile Software Co., Ltd., Beijing 100085 (CN)
(72) Inventor: WANG, Shuo, Beijing 100085 (CN); JIANG, Dongya, Beijing 100085 (CN); WANG, Guangjian, Beijing 100085 (CN)
(74) Representative: Hughes, Andrea Michelle

(56) References cited:
- EP-A2- 2 129 038
- US-A1- 2006 070 010
- US-A1- 2011 258 568
- US-B1- 8 302 031

## Description

### FIELD

The present disclosure relates to the technology field of intelligent terminal devices, and more particularly, to a method and an apparatus for displaying status information of an application.

### BACKGROUND

An intelligent terminal may be installed with various applications, and respective applications have different running states during the running process, for example, an application occupies memory space, consumes battery energy, and uploads or downloads data, etc. Different running states correspond to different status information, for example, the status information of the application may include the occupied memory space, the power consumption and the network access speed, and the status information enables a user to learn all aspects of the running state of the application.

In the related art, the status information of the application is usually displayed in a relevant interface set by a system. For example, in the iOS8 system, the user obtains the power consumption of the application through the following steps: clicking system settings, selecting a usage option in the displayed system setting interface, and choosing battery usage in a display interface of the usage option, such that battery usage percentage of the application is displayed in a display interface of the battery usage. US 2006070010 A1 relates to a method for system status visualization. The expandable component tree graphic includes multiple parent icons and multiple child icons. The parent icons are expandable to reveal respective child icons and at least one child icon is associated with a computer resource. Dynamic component graphics are associated with the parent icons and child icons. A set of related dynamic component graphics are adapted to change based on changes relating to a status of the computer resource. US 8302031 B1 relates to a method for configuring information displayed on a screen. A display model including a status page and at least one configuration page is generated on the screen. A header and a status icon are displayed on the at least one configuration page. At least one configuration page is filtered to prevent the at least one configuration page from being displayed on the screen. US 2001258568 A1 relates to a graphical display used for visualization of control techniques in a process control system. The graphic display includes an image associated with a portion of a process and icons associated with corresponding process variables. Some icons include a symbol representing a change of one value of the associated process variable relative to another value of the process variable. EP 2129038 A2 relates a server managing apparatus. A controlling unit obtains server information. An editing unit reads the server information and generates physical server information and logical server information including information on user application and attribute information. A display unit displays screen display information simulating the physical location of the physical server.

### SUMMARY

In order to overcome problems existing in the related art, embodiments of the present disclosure provide a method and an apparatus for displaying status information of an application. The technical solutions are presented as follows.

According to a first aspect of the present disclosure, there is provided a method for displaying status information of an application as defined by claim 1.

Obtaining status information of the application may include: obtaining the status information matching a type of status information to be displayed via a first designated port, based on the type of status information to be displayed; or obtaining a notification message of the application and determining the notification message as the status information of the application.

Obtaining a notification message of the application may include: accessing a message reminder function of a system via a second designated port, and obtaining the notification message of the application when the message reminder function reminds the notification message pushed by the application; or receiving the notification message written by the application via a third designated port.

Displaying a suspension icon on the application interface of the application may include: displaying first status information in the display area of the suspension icon when the status information of the application includes multiple types of status information; and switching the first status information to second status information when a click operation on the suspension icon is detected.

After displaying a suspension icon on the application interface of the application, the method may further include: obtaining new status information of the application at specified time intervals; and displaying the new status information of the application in the display area of the suspension icon.

Alternatively or additionally, after displaying a suspension icon on the application interface of the application, the method may further include: stopping displaying the status information of the application in the display area of the suspension icon, when it is detected that the application starts running in the background or stops running.

According to a second aspect of the present disclosure, there is provided an apparatus for displaying status information of an application as defined by claim 7.

[Deleted].

[Deleted].

[Deleted].

[Deleted].

[Deleted].

According to a third aspect of the present disclosure, there is provided a computer program as defined by claim 6.

The above technical solutions provided by embodiments of the present disclosure may include the following advantageous effects.

By displaying, in the display area of the suspension icon, the status information of the application currently running in the foreground, a user may directly obtain the status information of the application via the suspension icon, thereby reducing the steps of obtaining the status information of the application and improving the efficiency of obtaining the status information of the application.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for displaying status information of an application according to an exemplary embodiment;
Fig. 2 is a flow chart showing a method for displaying status information of an application according to an exemplary embodiment;
Fig. 3 is a schematic diagram illustrating displaying status information of an application according to an exemplary embodiment;
Fig. 4 is a block diagram of an apparatus for displaying status information of an application according to an exemplary embodiment;
Fig. 5 is a block diagram of an apparatus for displaying status information of an application according to an exemplary embodiment.

### DETAILED DESCRIPTION

In order to make objectives, technical solutions and advantages of the present disclosure become apparent, implementations of the present disclosure will be further described in detail with reference to the drawings.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

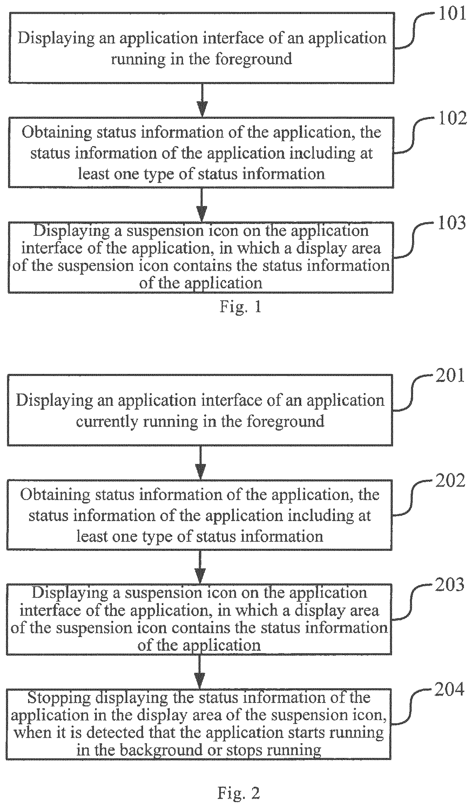

Fig. 1 is a flow chart of a method for displaying status information of an application according to an exemplary embodiment. As shown in Fig. 1, the method is applied to a terminal, and includes the following steps.

In step 101, an application interface of an application currently running in the foreground is displayed.

In step 102, status information of the application is obtained, the status information of the application including at least one type of status information.

In step 103, a suspension icon is displayed on the application interface of the application, in which the status information of the application is contained in a display area of the suspension icon.

With the method according to embodiments of the present disclosure, by displaying, in the display area of the suspension icon, the status information of the application currently running in the foreground, a user may directly obtain the status information of the application via the suspension icon, thereby reducing the steps of obtaining the status information of the application and improving the efficiency of obtaining the status information of the application.

Alternatively, the step of obtaining the status information of the application includes: obtaining the status information matching a type of status information to be displayed via a first designated port, based on the type of status information to be displayed; or obtaining a notification message of the application and determining the notification message as the status information of the application.

The step of obtaining the notification message of the application may include: accessing a message reminder function of a system via a second designated port, and obtaining the notification message of the application when the message reminder function reminds the notification message pushed by the application; or receiving the notification message written by the application via a third designated port.

The step of displaying the suspension icon on the application interface of the application may include: displaying first status information in the display area of the suspension icon when the status information of the application includes multiple types of status information; and switching the first status information to second status information when a click operation on the suspension icon is detected.

After displaying the suspension icon on the application interface of the application, the method may further include: obtaining new status information of the application at specified time intervals; and displaying the new status information of the application in the display area of the suspension icon.

Alternatively or additionally, after displaying the suspension icon on the application interface of the application, the method may further include: stopping displaying the status information of the application in the display area of the suspension icon, when it is detected that the application starts running in the background or stops running.

All the alternative technical solutions may be combined in any manner to form alternative embodiments of the present disclosure, which will not be elaborated.

Fig. 2 is a flow chart showing a method for displaying status information of an application according to an exemplary embodiment. As shown in Fig. 2, the method is applied to a terminal, and includes the following steps.

In step 201, an application interface of an application currently running in the foreground is displayed.

In embodiments of the present disclosure, the terminal may be installed with various applications, and each application may run in the foreground or in the background. When the application runs in the foreground, the terminal will display the application interface of the application currently running in the foreground. The application interface of the application may occupy an entire display screen of the terminal, or may occupy a part of the display screen. For example, when the terminal starts a single-hand operation mode, the application interface may occupy a part of the entire display screen of the terminal, such that the user may operate the application interface with one hand conveniently. The embodiments of the present disclosure do not specify the size of the application interface.

In step 202, status information of the application is obtained, and the status information of the application includes at least one type of status information.

In embodiments of the present disclosure, the status information of the application is used to indicate different states of the application in the running process. For example, the status information of the application may include different types of status information, such as memory usage percentage, battery usage percentage, network uploading speed and network downloading speed of the application, to provide the user with a comprehensive understanding of the running state of the application. The terminal may compute different types of status information according to performance parameters of different aspects of the application, for example, computing the memory usage percentage of the application based on the memory space occupied by the application, computing the battery usage percentage of the application based on the battery consumption of the application, and computing the network uploading speed of the application based on the amount of data uploaded per second.

Further, in the running process of the application, a server may push various notification messages to the application, for example, a notification message of reminding a new message received in a social application, or a notification message of reminding a new function in a web application. In order to enable the user to obtain more information of the application, in embodiments of the present disclosure, the notification message pushed by the server may be obtained and considered as the status information of the application, for subsequent displaying of this notification message.

Specifically, the process of obtaining the status information of the application may include two aspects.

In the first aspect, status information matching a type of status information to be displayed is obtained via a first designated port, based on the type of status information to be displayed.

In embodiments of the present disclosure, the status information has a plurality of different types, and it is possible to obtain corresponding status information according to the type of status information. Since the application includes different types of status information, the type of status information to be displayed may be set in advance, to provide the user with targeted displaying service. Specifically, optional buttons for different types of status information may be displayed in a setting interface of the application, and when it is detected that any type of status information is selected, the selected type of status information is determined as the type of status information to be displayed.

The first designated port is configured to access status information of different applications in the terminal, and to obtain the status information matching the type of status information to be displayed based on the type of status information to be displayed. The first designated port may be built in an operating system of the terminal, or may be added by a developer in secondary development based on the original operating system, which will not be defined in embodiments of the present disclosure.

In the second aspect, the notification message of the application is obtained and determined as the status information of the application.

The notification message of the application may be pushed to the terminal by the server, or may be obtained from the server by the terminal when it is detected that the application starts running in the foreground, which will not be defined in embodiments of the present disclosure.

Specifically, the notification message of the application may be obtained in two ways.

In the first way, a message reminder function of the system is accessed via a second designated port, and the notification message of the application is obtained when the message reminder function reminds the notification message pushed by the application.

The second designated port is configured to access the message reminder function of the system, and the message reminder function is used to receive notification messages of different applications pushed by the server.

Specifically, the message reminder function may store the received notification messages in a notification message list, and the terminal may periodically access the notification message list via the second designated port, and obtain the notification message of the application when it is detected that the notification message list contains the notification message pushed by the application. The notification message of the application may be deleted from the notification message list after being obtained, so as to avoid repeated acquisition of the same notification information of the application in the subsequent process. In order to avoid repeated acquisition of the notification message of the application, a timestamp may be added to each notification message, the latest timestamp is recorded after the notification message of the application is obtained, and afterwards, only notification messages after the latest timestamp are obtained for subsequent acquisition of the notification message of the application.

In the second way, the notification message written by the application is received via a third designated port.

The third designated port is configured to receive the notification message written by different application in the terminal.

In embodiments of the present disclosure, the application may actively write the notification message to be displayed into a suspension icon. Specifically, after the terminal obtains the notification message of the application from the server, the application may write the obtained notification message into a predetermined storage space via the third designated port, and the suspension icon reads the notification message in the predetermined storage space and displays the notification message in a display area, such that the suspension icon may display the notification message of the application. The content of notification message may contain text, links or the like, which will not be defined in embodiments of the present disclosure.

It should be noted that, when the application writes the notification message via the third designated port, the notification message matching a type of notification message to be displayed may be obtained based on the type of notification message to be displayed, and afterwards, the notification message matching the type of notification message to be displayed is written into the display area of the suspension icon. The type of notification message to be displayed may be set in advance.

It should be noted that, the first designated port, the second designated port and the third designated port may be the same port, or may be different ports, which will not be defined in embodiments of the present disclosure.

In step 203, the suspension icon is displayed on the application interface of the application, and the display area of the suspension icon contains the status information of the application.

The suspension icon is displayed in suspension on the application interface of the application. The suspension icon has mobility, that is, when it is detected that a movement operation is applied on the suspension icon, the suspension icon is controlled to move as locations indicated by the movement operation, till the movement operation ends, and the suspension icon is positioned at a location where the movement operation ends. The suspension icon may be shaped as a circle, a rectangle, a rounded rectangle, an oval or the like, which will not be defined in embodiments of the present disclosure.

In addition, the suspension icon occupies the display area of a predetermined size, and the display area of the suspension icon is used to display the status information of the application, that is, the status information of the application is contained in the display area of the suspension icon. The predetermined size is set on the premise that displaying of other information on the application interface is not affected, and may be set in proportion to a display size of the application interface, for example, occupying 2%, 5% or the like of the display size of the application interface, which will not be defined in embodiments of the present disclosure.

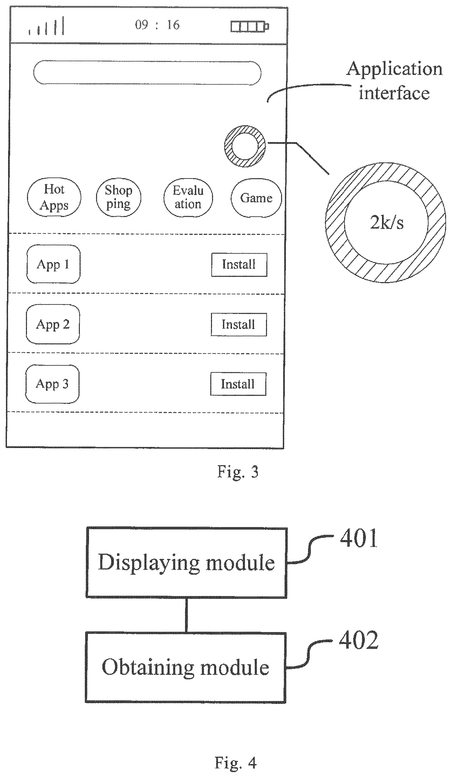

After the status information of the application is obtained, the status information of the application may be displayed in the display area of the suspension icon, such that the user may directly obtain the status information of the application via the suspension icon, thereby reducing the steps of obtaining the status information of the application and improving the efficiency of obtaining the status information of the application. As shown in Fig. 3, a schematic diagram for displaying status information of an application is presented, in which the suspension icon is displayed on the application interface of this application. The network uploading speed is taken as an example, and it is shown in the display area of the suspension icon that the current network uploading speed of this application is 2k/s.

In embodiments of the present disclosure, in order to improve diversity of the displaying, the display area of the suspension icon may display one type of status information or various types of status information. On the application interface of the application, displaying the suspension icon includes: displaying first status information in the display area of the suspension icon when the status information of the application includes multiple types of status information; and switching the first status information to second status information when a click operation on the suspension icon is detected.

The first status information and the second status information are of different types.

For example, the status information of the application includes A type status information and B type status information. After the two types of status information are obtained, A type status information is first displayed in the display area of the suspension icon. When it is detected that the click operation is applied on the suspension icon, A type status information is switched to B type status information, that is, B type status information is displayed in the display area of the suspension icon. When the click operation on the suspension icon is detected again, B type status information is switched to A type status information. That is, various types of status information may be switched for displaying according to the click operation on the suspension icon.

In another embodiment, various types of status information may be switched automatically for displaying. Specifically, it is possible to set a switching interval for status information, i.e. to switch into a different type of status information at switching intervals. The switching interval may be set by the system or preset by the user, which will not be defined in embodiments of the present disclosure.

It should be noted that, when the status information of the application is the notification message of the application, a function of deleting the notification message may be provided. For example, when a specified operation on the suspension icon is detected, a detail page of the notification message is accessed, or a corresponding link is opened, such that the notification message is no longer displayed in the display area of the suspension icon, which reflects that the user has dealt with the notification message and hence avoids resource waste for keeping displaying the notification message. The specified operation may be an upward movement operation regarding a movable sliding block.

In embodiments of the present disclosure, the status information of the application may vary all the time, and the terminal may obtain and display the status information of the application in real time, such that the user may learn the latest status information of the application. The detailed process may include: obtaining new status information of the application at specified time intervals; and displaying the new status information of the application in the display area of the suspension icon.

It should be noted that the display area of the suspension icon may further include a movable area. For example, a movable sliding block is provided in the center of the display area of the suspension icon, and the movable sliding block may move inside the display area of the suspension icon. The terminal may respond differently to different operations on the movable sliding block.

In step 204, the displaying of the status information of the application in the display area of the suspension icon is stopped, when it is detected that the application starts running in the background or stops running.

In embodiments of the present disclosure, the suspension icon only displays the status information of the application currently running in the foreground, and does not display status information of applications that run in the background or are not running. That is, when it is detected that the application starts running in the background or when it is detected that the application stops running, the display area of the suspension icon stops displaying the status information of the application.

It should be noted that when the application starts running in the background or stops running, the process from step 201 to step 203 is executed if the terminal detects another application has started running in the foreground.

In another embodiment, if the user is only concerned about the running state of a certain application when using the terminal, it is possible to set an application to be displayed; when it is detected that the application to be displayed starts running in the foreground, status information of the application to be displayed is displayed by the suspension icon, which provides targeted displaying of the status information of the application.

With the method according to embodiments of the present disclosure, by displaying, in the display area of the suspension icon, the status information of the application currently running in the foreground, the user may directly obtain the status information of the application via the suspension icon, thereby reducing the steps of obtaining the status information of the application and improving the efficiency of obtaining the status information of the application.

Fig. 4 is a block diagram of an apparatus for displaying status information of an application according to an exemplary embodiment. Referring to Fig. 4, the apparatus includes a displaying module 401 and an obtaining module 402.

The displaying module 401 is connected with the obtaining module 402, and configured to display an application interface of an application running in the foreground. The obtaining module 402 is configured to obtain status information of the application, the status information of the application including at least one type of status information. The displaying module 401 is further configured to display a suspension icon on the application interface of the application, in which the status information of the application is contained in a display area of the suspension icon.

The obtaining module 402 may be configured to obtain the status information matching a type of status information to be displayed via a first designated port, based on the type of status information to be displayed; or the obtaining module 402 is configured to obtain a notification message of the application and determine the notification message as the status information of the application.

Alternatively or additionally, the obtaining module 402 may be configured to access a message reminder function of a system via a second designated port, and obtain the notification message of the application when the message reminder function reminds the notification message pushed by the application; or the obtaining module 402 is configured to receive the notification message written by the application via a third designated port.

The displaying module 401 may be configured to display first status information in the display area of the suspension icon when the status information of the application includes multiple types of status information; and switch the first status information to second status information when a click operation on the suspension icon is detected.

The obtaining module 402 may further be configured to obtain new status information of the application at specified time intervals; and the displaying module 401 is further configured to display the new status information of the application in the display area of the suspension icon.

The displaying module 401 may further be configured to stop displaying the status information of the application in the display area of the suspension icon, when it is detected that the application starts running in the background or stops running.

With the apparatus according to embodiments of the present disclosure, by displaying, in the display area of the suspension icon, the status information of the application currently running in the foreground, the user may directly obtain the status information of the application via the suspension icon, thereby reducing the steps of obtaining the status information of the application and improving the efficiency of obtaining the status information of the application.

With respect to the apparatuses in the above embodiments, the specific manners for performing operations for individual modules therein have been described in detail in the embodiments regarding the methods for displaying status information of the application, which will not be elaborated herein.

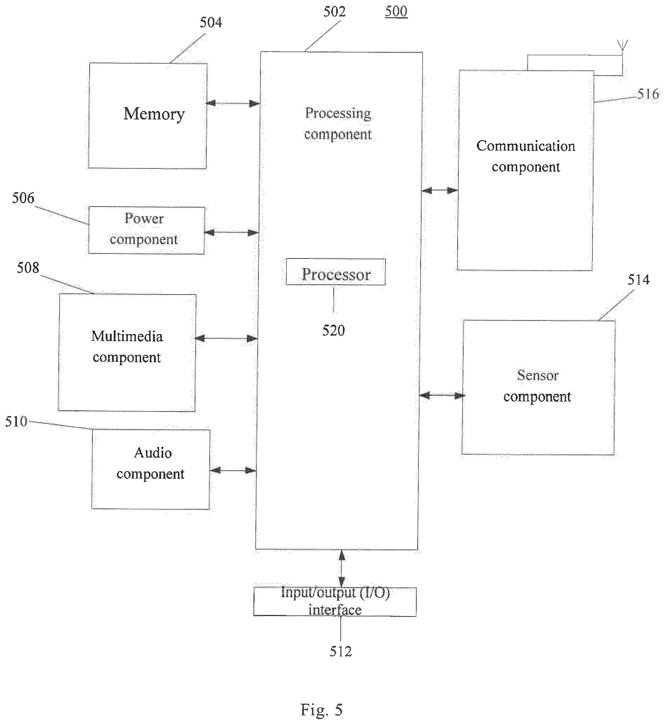

Fig. 5 is a block diagram of an apparatus for displaying status information of an application according to an exemplary embodiment. For example, the apparatus 500 may be a mobile phone, a personal computer, a digital broadcast terminal, a messaging device, a gaming console, a tablet, a medical device, exercise equipment, a personal digital assistant, and the like.

Referring to Fig. 5, the apparatus 500 may include one or more of the following components: a processing component 502, a memory 504, a power component 506, a multimedia component 505, an audio component 510, an input/output (I/O) interface 512, a sensor component 514, and a communication component 516.

The processing component 502 typically controls overall operations of the apparatus 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 505 and the processing component 502.

The memory 504 is configured to store various types of data to support the operation of the apparatus 500. Examples of such data include instructions for any applications or methods operated on the apparatus 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 500. The power component 506 may include a power management system, one or more power sources, and any other components associated with the generation, management, and distribution of power in the apparatus 500.

The multimedia component 505 includes a screen providing an output interface between the apparatus 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 505 includes a front camera and/or a rear camera. The front camera and the rear camera may receive an external multimedia datum while the apparatus 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the apparatus 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the apparatus 500. For instance, the sensor component 514 may detect an open/closed status of the apparatus 500, relative positioning of components, e.g., the display and the keypad, of the apparatus 500, a change in position of the apparatus 500 or a component of the apparatus 500, a presence or absence of user contact with the apparatus 500, an orientation or an acceleration/deceleration of the apparatus 500, and a change in temperature of the apparatus 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the apparatus 500 and other devices. The apparatus 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 504, executable by the processor 520 in the apparatus 500, for performing the above-described methods. For example, the non-transitory computer-readable storage medium may be a ROM, a RAM, a CD-ROM, a magnetic tape, a floppy disc, an optical data storage device, and the like.

In exemplary embodiments, a non-transitory computer-readable storage medium is further provided. The storage medium has stored therein instructions that, when executed by a processor of the mobile terminal, cause the mobile terminal to perform the method for displaying status information of the application.

The invention is specified in the appended claims.

## Claims

1. A method for displaying status information of an application, comprising:
displaying an application interface of an application running in the foreground (101; 201);
obtaining status information of the application, the status information of the application comprising at least one type of status information (102; 202);
displaying a suspension icon on the application interface of the application (203), wherein the suspension icon occupies a display area of a predetermined size of the application interface, wherein the status information of the application is displayed in the display area of the suspension icon, and wherein the suspension icon is controlled to move location when a movement operation is applied on the suspension icon;
stopping displaying the status information of the application in the display area of the suspension icon, when it is detected that the application starts running in the background or stops running (204); and
when it is detected that another application is running in the foreground, displaying an application interface of the another application, obtaining status information of the another application, and displaying the status information of the another application in the display area of the suspension icon.

2. The method according to claim 1, wherein obtaining status information of the application (102; 202) comprises:
obtaining the status information matching a type of status information to be displayed via a first designated port, based on the type of status information to be displayed; or
obtaining a notification message of the application and determining the notification message as the status information of the application.

3. The method according to claim 2, wherein obtaining a notification message of the application comprises:
accessing a message reminder function of a system via a second designated port, and obtaining the notification message of the application when the message reminder function reminds the notification message pushed by the application; or
receiving the notification message written by the application via a third designated port.

4. The method according to any one of claims 1-3, wherein displaying a suspension icon on the application interface of the application (103; 203) comprises:
displaying first status information in the display area of the suspension icon when the status information of the application comprises multiple types of status information; and
switching the first status information to second status information when a click operation on the suspension icon is detected.

5. The method according to any one of claims 1-4, after displaying a suspension icon on the application interface of the application (103; 203), further comprising:
obtaining new status information of the application at specified time intervals; and
displaying the new status information of the application in the display area of the suspension icon.

6. A computer program, when run on a processor, performing a method for displaying status information of an application according to any one of claims 1-5.

7. An apparatus for displaying status information of an application, comprising:
a processor (502);
a memory (504) configured to store instructions executed by the processor;
wherein the processor is configured to execute a method for displaying status information of an application according to any one of claims 1-5.

## Patentansprüche

1. Verfahren zum Anzeigen von Statusinformationen einer Anwendung, umfassend:
Anzeigen einer Anwendungsschnittstelle einer im Vordergrund laufenden Anwendung (101; 201);
Erhalten von Statusinformationen der Anwendung, wobei die Statusinformationen der Anwendung mindestens einen Typ von Statusinformationen (102; 202) umfassen;
Anzeigen eines Suspend-Symbols auf der Anwendungsschnittstelle der Anwendung (203), wobei das Suspend-Symbols einen Anzeigebereich einer vorbestimmten Größe der Anwendungsschnittstelle belegt, wobei die Statusinformationen der Anwendung in dem Anzeigebereich des Suspend-Symbols angezeigt werden und wobei das Suspend-Symbols so gesteuert wird, dass es sich bewegt, wenn ein Bewegungsvorgang auf das Suspend-Symbols angewendet wird;
Beenden der Anzeige der Statusinformationen der Anwendung im Anzeigebereich des Suspend-Symbols, wenn erkannt wird, dass die Anwendung im Hintergrund zu laufen beginnt oder zu laufen aufhört (204); und
wenn erkannt wird, dass eine andere Anwendung im Vordergrund läuft, Anzeigen einer Anwendungsschnittstelle der anderen Anwendung, Erhalten von Statusinformationen der anderen Anwendung und Anzeigen der Statusinformationen der anderen Anwendung im Anzeigebereich des Suspend-Symbols.

2. Verfahren nach Anspruch 1, wobei das Erhalten von Statusinformationen der Anwendung (102; 202) umfasst:
Erhalten der Statusinformationen, die mit einem Typ von Statusinformationen übereinstimmen, die über einen ersten designierten Anschluss angezeigt werden sollen, basierend auf dem Typ der anzuzeigenden Statusinformationen; oder
Erhalten einer Benachrichtigungsnachricht der Anwendung und Bestimmen der Benachrichtigungsnachricht als die Statusinformation der Anwendung.

3. Verfahren nach Anspruch 2, wobei das Erhalten einer Benachrichtigungsnachricht der Anwendung umfasst:
Zugreifen auf eine Nachrichtenerinnerungsfunktion eines Systems über einen zweiten designierten Anschluss und Erhalten der Benachrichtigungsnachricht der Anwendung, wenn die Nachrichtenerinnerungsfunktion an die von der Anwendung geschobene Benachrichtigungsnachricht erinnert; oder
Empfangen der von der Anwendung geschriebenen Benachrichtigung über einen dritten designierten Anschluss.

4. Verfahren nach einem der Ansprüche 1-3, wobei das Anzeigen eines Suspend-Symbols auf der Anwendungsschnittstelle der Anwendung (103; 203) umfasst:
Anzeigen von ersten Statusinformationen im Anzeigebereich des Suspend-Symbols, wenn die Statusinformationen der Anwendung mehrere Arten von Statusinformationen umfassen; und
Umschalten der ersten Statusinformation auf eine zweite Statusinformation, wenn ein Klickvorgang auf das Suspend-Symbol erkannt wird.

5. Verfahren nach einem der Ansprüche 1 bis 4, nach dem Anzeigen eines Suspend-Symbols auf der Anwendungsschnittstelle der Anwendung (103; 203) weiter umfassend:
Erhalten neuer Statusinformationen der Anwendung in vorgegebenen Zeitintervallen; und
Anzeigen der neuen Statusinformationen der Anwendung im Anzeigebereich des Suspend-Symbols.

6. Computerprogramm, das, wenn es auf einem Prozessor ausgeführt wird, ein Verfahren zur Anzeige von Statusinformationen einer Anwendung nach einem der Ansprüche 1-5 durchführt.

7. Einrichtung zum Anzeigen von Statusinformationen einer Anwendung, umfassend:
einen Prozessor (502);
einen Speicher (504), der so konfiguriert ist, dass er vom Prozessor ausgeführte Befehle speichert;
wobei der Prozessor so konfiguriert ist, dass er ein Verfahren zum Anzeigen von Statusinformationen einer Anwendung nach einem der Ansprüche 1-5 ausführt.

## Revendications

1. Procédé d'affichage d'informations d'état d'une application comprenant :
l'affichage d'une interface d'application d'une application fonctionnant en avant-plan (101; 201) ;
l'obtention d'informations d'état de l'application, les informations d'état de l'application comprenant au moins un type d'informations d'état (102 ; 202) ;
l'affichage d'une icône de suspension sur l'interface d'application de l'application (203), dans lequel l'icône de suspension occupe une zone d'affichage d'une taille prédéterminée de l'interface d'application, dans lequel les informations d'état de l'application sont affichées dans la zone d'affichage de l'icône de suspension, et dans lequel l'icône de suspension est commandée pour déplacer d'emplacement lorsqu'une opération de mouvement est appliquée sur l'icône de suspension ;
l'arrêt de l'affichage des informations d'état de l'application dans la zone d'affichage de l'icône de suspension, lorsqu'il est détecté que l'application commence à fonctionner en arrière-plan ou arrête de fonctionner (204) ; et
lorsqu'il est détecté qu'une autre application fonctionne en avant-plan, l'affichage d'une interface d'application de l'autre application, l'obtention d'informations d'état de l'autre application et l'affichage d'informations d'état de l'autre application dans la zone d'affichage de l'icône de suspension.

2. Procédé selon la revendication 1, dans lequel l'obtention d'informations d'état de l'application (102; 202) comprend :
l'obtention des informations d'état correspondant à un type d'informations d'état à afficher par le biais d'un premier port désigné, en fonction du type d'informations d'état à afficher ; ou
l'obtention d'un message de notification de l'application et la détermination du message de notification en tant qu'informations d'état de l'application.

3. Procédé selon la revendication 2, dans lequel l'obtention d'un message de notification de l'application comprend :
l'accès à une fonction de rappel de message d'un système par le biais d'un deuxième port désigné, et l'obtention du message de notification de l'application lorsque la fonction de rappel de message rappelle le message de notification mis en avant par l'application ; ou
la réception du message de notification rédigé par l'application par le biais d'un troisième port désigné.

4. Procédé selon l'une quelconque des revendications 1-3, dans lequel l'affichage d'une icône de suspension sur l'interface d'application de l'application (103 ; 203) comprend :
l'affichage de premières informations d'état dans la zone d'affichage de l'icône de suspension lorsque les informations d'état de l'application comprennent plusieurs types d'informations d'état ; et
le passage des premières informations d'état aux deuxièmes informations d'état lorsqu'une opération de clic est détectée sur l'icône de suspension.

5. Procédé selon l'une quelconque des revendications 1-4, après l'affichage d'une icône de suspension sur l'interface d'application de l'application (103 ; 203), comprenant en outre :
l'obtention de nouvelles informations d'état de l'application à des intervalles de temps spécifiés ; et
l'affichage de nouvelles informations d'état de l'application dans la zone d'affichage de l'icône de suspension.

6. Programme informatique, lorsqu'il fonctionne sur un processeur, la réalisation d'un procédé d'affichage d'informations d'état d'une application selon l'une quelconque des revendications 1-5.

7. Appareil d'affichage d'informations d'état d'une application comprenant :
un processeur (502) ;
une mémoire (504) configurée pour stocker des instructions exécutées par le processeur;
dans lequel le processeur est configuré pour exécuter un procédé d'affichage d'informations d'état d'une application selon l'une quelconque des revendications 1-5.
